# EUROPÄISCHE PATENTSCHRIFT

(11) **EP 0 892 281 B1**
(45) Veröffentlichungstag und Bekanntmachung des Hinweises auf die Patenterteilung: **20.09.2006**
(21) Anmeldenummer: 98110908.5
(22) Anmeldetag: 15.06.1998
(51) Int. Cl.: G01S 13/93

(54) **Verfahren und Vorrichtung zur Erfassung der Fahrsituation eines Kraftfahrzeuges**
Method and system for determining the driving situation of a vehicle
Méthode et procédé pour déterminer la situation de conduite d'un véhicule

(30) Priorität: 17.07.1997 DE 19730675
(43) Veröffentlichungstag der Anmeldung: 20.01.1999
(73) Patentinhaber: Volkswagen Aktiengesellschaft, 38436 Wolfsburg (DE)
(72) Erfinder: Bäker, Wolfgang, 38114 Braunschweig (DE); Ruchatz, Thomas, Dipl.-Ing., 38165 Lehre (DE); Andreas, Peter, Dipl.-Ing., 38518 Gifhorn (DE)

(56) Entgegenhaltungen:
- EP-A- 0 391 387
- EP-A- 0 716 949
- US-A- 3 725 921
- US-A- 4 862 854
- US-A- 5 566 072

## Beschreibung

Die Erfindung betrifft ein Verfahren zur Erfassung der Fahrsituation eines Kraftfahrzeuges.

Zur Verbesserung des Fahrkomforts sind vielfältige Anstrengungen in unterschiedlichen Kraftfahrzeugkomponenten unternommen worden.

So weisen z.B. moderne Kraftfahrzeuge Längsdynamikregelungen oder Getrieberegelungen mit unterschiedlichen Fahrzeugstrategien auf, um das Kraftfahrzeug optimal dem jeweiligen Verkehrsgeschehen anzupassen. Diese Regelungen sind immer als Kompromiß Autobahn - Landstraße - Stadt abgestimmt.

Des weiteren sind Vorrichtung zur Erfassung des Abstandes umgebender Kraftfahrzeuge, insbesondere vorausfahrender Kraftfahrzeuge, bekannt, die zur Einhaltung bzw. Überprüfung der Sicherheitsabstände beispielsweise für Überholvorgänge dienen.

Eine solche Vorrichtung ist beispielsweise aus der DE 196 14 061 bekannt, die einen Entfernungssensor zum Abtasten eines Laserstrahls in einer Breitenrichtung eines Systemfahrzeuges aufweist, um relative Positionen und relative Winkel von Objekten in einem vorderen erfaßbaren Bereich zu bestimmen, und das Gleichspurwahrscheinlichkeiten bestimmt, daß die Objekte in derselben Spur einer Straße wie das Systemfahrzeug existieren, wobei eine veränderliche Wahrscheinlichkeitsverteilung verwendet wird, die auf den Relativpositionen und den relativen Winkeln der Objekte basiert, wodurch insbesondere Probleme der Erfassung in Kurven vermieden werden. Nachteilig an den bekannten Vorrichtungen zur Erfassung des Abstandes ist, daß die Interpretation der Fahrzeugumgebung durch das System stark von den jeweiligen Fahrsituationen abhängig ist.

Der Erfindung liegt daher das technische Problem zugrunde, ein Verfahren zur Erfassung der Fahrsituation eines Kraftfahrzeuges zu schaffen, mittels dessen fahrsituationsabhängig Fahrzeugkomponenten automatisch abstimmbar sind.

Die Lösung des technischen Problems ergibt sich durch die Merkmale der Patentansprüche 1 und 9.

Dabei werden mittels einer bekannten Abstandssensorik die Anzahl und die Geschwindigkeiten der das Kraftfahrzeug umgebenden Kraftfahrzeuge ermittelt und mit Referenz- oder Schwellenwerten verglichen. Die Ermittlung der Geschwindigkeiten des Gegenverkehrs ist ebenfalls möglich, da bei herkömmlichen Abstandssensoriken diese aus den Daten identifiziert und herausgefiltert werden. Viele Fahrzeuge mit einer sehr großen Geschwindigkeit lassen beispielsweise auf eine Autobahn oder eine Landstraße schließen, wobei durch die Anzahl bzw. die auftretenden Spitzengeschwindigkeiten ermittelbar ist, ob es sich um eine Landstraße oder eine Autobahn handelt. Entsprechend kann bei niedrigen Geschwindigkeiten auf Stadtverkehr geschlossen werden. Da auch der Gegenverkehr berücksichtigt wird, kann sogar bei einseitigem Stau zuverlässig die Fahrsituation ermittelt und anderen Fahrzeugkomponenten zur Feineinstellung zur Verfügung gestellt werden. Auch sich am Fahrbahnrand befindende stehende Objekte können Auskunft über die Fahrsituation geben. Aus diesem Grund werden nach einer vorteilhaften Weiterbildung diese Objekte erfaßt und bewertet.

Weitere vorteilhafte Ausgestaltungen der Erfindung ergeben sich aus den Unteransprüchen.

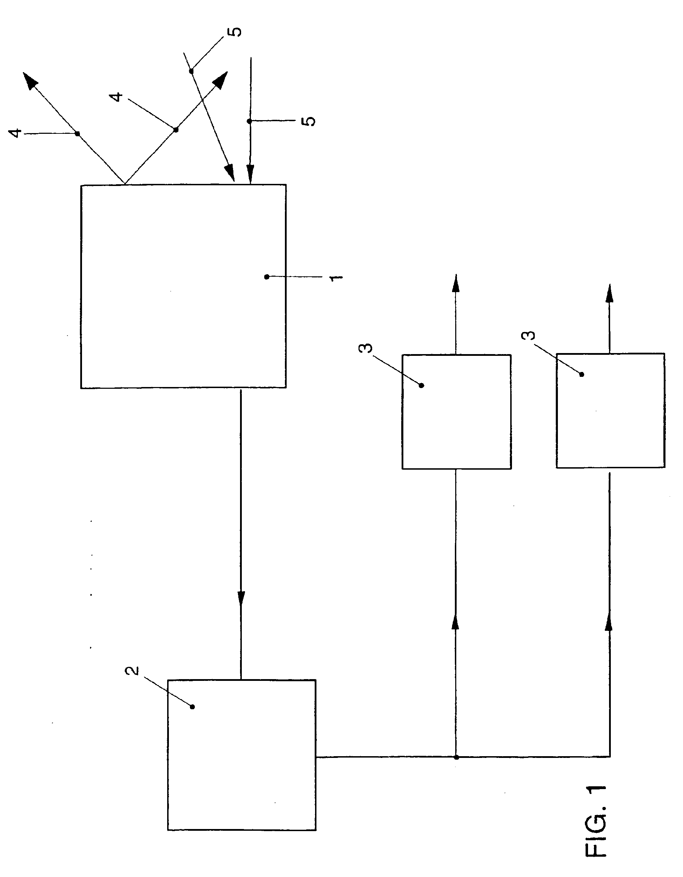

Die Erfindung wird nachfolgend anhand eines bevorzugten Ausführungsbeispieles näher erläutert. Die einzige Figur zeigt ein Blockschaltbild der Vorrichtung zur Durchführung des Verfahrens.

Die Vorrichtung umfaßt eine Abstandssensorik 1, eine Auswertelogik 2 und Fahrzeugkomponenten 3. Die Abstandssensorik 1 tastet mittels eines Abstrahlsignales 4 die seitliche und vordere Umgebung nach Objekten bzw. Kraftfahrzeugen ab. Je nach Ausbildung der Abstandssensorik beispielsweise als Lidar-, Radar oder Ultraschallsensor wird das Abstrahlsignal 4 über ein bestimmtes Segment geschwenkt. Des weiteren weist die Abstandssensorik eine auf das Abstrahlsignal 4 abgestimmte Empfangseinrichtung auf, die von Objekten reflektierten Signale 5 nach Einfallswinkel und Laufzeit erfaßt. Die erfaßten Signale 5 werden zur weiteren Auswertung an die Auswertelogik 2 übergeben, die mittels bekannter Algorithmen die Signale 5 in Geschwindigkeiten und zugehörige Positionen des Objektes umrechnet. Des weiteren kann mittels der erfaßten relativen Positionen bzw. Winkeln bzw. durch Auswertung der für eine Fahrschlauchprädikation verwendeten Kurvensignale auf den Radius der von erfaßten Kraftfahrzeugen durchfahrenden Kurven geschlossen werden. Bei der Sicherheitsabstandsmessung benötigt man diese Kenntnis, um auch bei Kurvenfahrten sicher zu wissen, an welchem Kraftfahrzeug man wirklich "angedockt" ist. Es kann auch die Anzahl der durchfahrenen Kurven ermittelt werden. Zusätzlich können auch die aktiven und/oder passiven Überholvorgänge ermittelt werden, wobei für die aktiven Überholvorgänge auch auf Signale der Lenkung zurückgegriffen werden kann. Die erfaßten Daten sind für die jeweilige Fahrsituation derart charakteristisch, daß aus ihnen auf die Fahrsituation beispielsweise Autobahn, Landstraße oder Stadtverkehr geschlossen werden kann. So sind beispielsweise hohe Geschwindigkeiten und/oder langgestreckte Kurven ein Merkmal für Autobahnen, wohingegen scharfe Kurven und langsame Geschwindigkeiten ein Merkmal des Standverkehrs ist. Die einzelnen Parameter können dabei auch miteinander gewichtet werden, d.h. je mehr erfaßte Kraftfahrzeuge z.B. mit sehr hohen Geschwindigkeiten fahren, desto weniger spielen Kurvenradius, Überholvorgänge etc., eine Rolle, um sicher auf die Fahrsituation Autobahn zu schließen. Mit der derart erfolgten Identifikation können nun beispielsweise Längsdynamikregelungen und Tracking-Software gezielt abgestimmt werden. Weitere Ausgestaltungen der Erfindung finden sich in den Ansprüchen 2-4, 7 und 9. Der besondere Vorteil der Erfindung ist, daß im wesentlichen auf bereits vorhandene Hardware zurückgegriffen werden kann, was eine besonders kostengünstige Realisierung erlaubt.

## Patentansprüche

1. Verfahren zur Erfassung der Fahrsituation eines Kraftfahrzeuges, mittels einer Abstandssensorik (1) in Form eines Lidar- oder Radarsensors, umfassend folgende Verfahrensschritte:
a) Erfassen zumindest sich bewegender, umgebender Objekte, insbesondere Kraftfahrzeuge, durch die Abstandssensorik,
b) Ermitteln der Anzahl und der Geschwindigkeit der erfaßten Objekte, insbesondere von Kraftfahrzeugen, sowie deren Bewegungsrichtung und
c) Vergleich der erfaßten und ermittelten Werte mit Referenz- oder Schwellwerten für Fahrsituationen.

2. Verfahren nach Anspruch 1, **dadurch gekennzeichnet, daß** zusätzlich auch die Fahrspur der erfaßten Objekte, insbesondere von Kraftfahrzeugen, ermittelt wird.

3. Verfahren nach Anspruch 1 oder 2, **dadurch gekennzeichnet, daß** die Anzahl der vorhandenen Fahrspuren ermittelt wird.

4. Verfahren nach einem der Ansprüche 1 bis 3, **dadurch gekennzeichnet, daß** für eine Interpretation der Fahrzeugumgebung stehende Ziele außerhalb der Fahrspuren erfaßt und einzeln oder in ihrer Gesamtheit bewertet werden.

5. Verfahren nach einem der Ansprüche 1 bis 4, **dadurch gekennzeichnet, daß** mittels der Daten der Abstandssensorik (1) die Anzahl der aktiven und/oder passiven Überholvorgänge ermittelt und mit zugehörigen Referenzwerten verglichen wird.

6. Verfahren nach einem der Ansprüche 1 bis 5, **dadurch gekennzeichnet, daß** aus den erfaßten Daten der Abstandssensorik (1) die Anzahl und/oder die Radien der durchfahrenen Kurven ermittelt wird und mit zugehörigen Referenzwerten verglichen wird.

7. Verfahren nach Anspruch 5 oder 6, **dadurch gekennzeichnet, daß** nur eine ermittelte Größe mit zugehörigen Referenzwerten verglichen wird, wobei die Referenzwerte von anderen ermittelten Größen abhängig sind.

8. Verfahren nach einem der vorhergehenden Ansprüche, **dadurch gekennzeichnet, daß** die Fahrsituationen in Autobahn, Landstraße und Stadt unterteilt sind.

9. Vorrichtung adaptiert zur Durchführung des Verfahrens nach einem der Ansprüche 1-8 zur Erfassung der Fahrsituation eines Kraftfahrzeuges, **dadurch gekennzeichnet, daß** die Vorrichtung eine Abstandssensorik (1), eine Vergleichsschaltung und einen Referenz- oder Schwellwertspeicher umfaßt, wobei aus den Daten der Abstandssensorik (1) Verkehrsparameter ableitbar und mit Referenz- oder Schwellwerten vergleichbar sind.

## Claims

1. Method for sensing the travelling situation of a motor vehicle by means of a distance sensor system (1), in the form of a lidar or radar sensor comprising the following method steps:
a) At least moving, surrounding objects, in particular motor vehicles, are sensed by the distance sensor system,
b) The number and the velocity of the sensed objects, in particular motor vehicles, and their direction of movement are determined, and
c) The sensed and determined values are compared with reference values or threshold values for travelling situations.

2. Method according to Claim 1, **characterized in that**, in addition, the lane of the sensed objects, in particular motor vehicles, is also determined.

3. Method according to Claim 1 or 2, **characterized in that** the number of existing lanes is determined.

4. Method according to one of Claims 1 to 3, **characterized in that** targets outside the lanes, which targets stand for an interpretation of the vehicle surroundings, are sensed and evaluated individually or in their entirety.

5. Method according to one of Claims 1 to 4, **characterized in that** the number of active and/or passive overtaking manoeuvres is determined by means of the data of the distance sensor system (1) and is compared with associated reference values.

6. Method according to one of Claims 1 to 5, **characterized in that** the number and/or the radii of the bends travelled through is determined from the sensed data of the distance sensor system (1) and is compared with associated reference values.

7. Method according to Claim 5 or 6, **characterized in that** only a variable which has been determined is compared with associated reference values, the reference values being dependent on other variables which have been determined.

8. Method according to one of the preceding claims, **characterized in that** the travelling situations are divided into motorway, country road and town.

9. Device, adapted for carrying out the process according to one of Claims 1-8 for sensing the travelling situation of a motor vehicle, **characterized in that** the device comprises a distance sensor system (1), a comparison circuit and a reference memory or threshold-value memory, it being possible to derive the traffic parameters from the data of the distance sensor system (1) and to compare them with reference values or threshold values.

## Revendications

1. Procédé pour déterminer la situation de conduite d'un véhicule automobile au moyen d'une unité de détection de distances (1) en forme de capteur lidar ou radar, comportant les étapes suivantes :
a) Détection au moins d'objets environnants se déplaçant, en particulier des véhicules automobiles, par l'unité de détection de distances,
b) Détermination du nombre et de la vitesse des objets détectés, en particulier des véhicules automobiles, ainsi que de leur sens de déplacement et
c) Comparaison des valeurs détectées et déterminées avec des valeurs de référence ou des valeurs seuils correspondant à des situations de conduite.

2. Procédé selon la revendication 1, **caractérisé en ce qu'**en plus la voie de circulation des objets détectés, en particulier des véhicules automobiles, est également déterminée.

3. Procédé selon la revendication 1 ou 2, **caractérisé en ce que** le nombre de voies de circulation présentes est déterminé.

4. Procédé selon l'une quelconque des revendications 1 à 3, **caractérisé en ce que** des objets stationnaires en dehors des voies de circulation sont détectés et évalués individuellement ou dans leur ensemble en vue d'une interprétation de l'environnement du véhicule.

5. Procédé selon l'une quelconque des revendications 1 à 4, **caractérisé en ce que** le nombre de manoeuvres de dépassement actives et/ou passives est déterminé au moyen des données de l'unité de détection de distances (1) et comparé avec des valeurs de référence correspondantes.

6. Procédé selon l'une quelconque des revendications 1 à 5, **caractérisé en ce que** le nombre et/ou les rayons des courbes effectuées est ou sont déterminé(s) sur base des données détectées par l'unité de détection de distances (1) et comparé (s) avec des données de référence correspondantes.

7. Procédé selon la revendication 5 ou 6, **caractérisé en ce qu'**uniquement une grandeur déterminée est comparée avec des valeurs de référence correspondantes, les valeurs de référence dépendant d'autres grandeurs déterminées.

8. Procédé selon l'une quelconque des revendications précédentes, **caractérisé en ce que** les situations de conduite sont subdivisées en autoroute, route nationale et ville.

9. Dispositif adapté pour la mise en oeuvre du procédé selon l'une quelconque des revendications 1 à 8, pour déterminer la situation de conduite d'un véhicule automobile, **caractérisé en ce que** le dispositif comporte une unité de détection de distances (1), un circuit comparateur et une mémoire de valeurs de référence ou de valeurs seuils, des paramètres de circulation pouvant être dérivés des données de l'unité de détection de distances (1) et comparés avec des valeurs de référence ou des valeurs seuils.
